# EUROPEAN PATENT APPLICATION

(11) **EP 4 597 974 A1**
(43) Date of publication of application: **06.08.2025**
(21) Application number: 24305161.2
(22) Date of filing: 30.01.2024
(51) Int. Cl.: H04L 45/00, H04L 47/122

(54) **METHOD FOR ADAPTIVE ROUTING IN HIGH-PERFORMANCE COMPUTERS**

(71) Applicant: BULL SAS, 78340 Les Clayes-Sous-Bois (FR)
(72) Inventor: LAGADEC, Pierre-Axel, 06270 Villeneuve Loubet (FR)
(74) Representative: Cabinet Camus Lebkiri

(57) **Abstract**

The invention concerns a method for adaptive routing implemented by a router (11) of a high-performance computer (1), the method comprising at least:
- Receiving, at an input port (11) of the plurality of input ports of the router (11), a packet to be routed towards an output port of the plurality of output ports (01,02) of the router (11),
- Selecting an output port determination function from a plurality of predefined determination functions, based on a compliance of a network congestion of output ports of the plurality of output ports (01,02) with predefined parameters,
- Using the determination function to determine at least one output port from a subset of the plurality of output ports (01,02), the subset of the plurality of output ports (01,02) being determined based on the plurality of predefined parameters,
- Sending the packet using the determined output port.

## Description

### TECHNICAL FIELD

The technical field of the invention is the field of high-performance computing, also referred to as "HPC".

The present document concerns a method for adaptive routing in a high-performance computer, and especially well-suited for a particular topography, DragonFly+.

### STATE OF THE ART

High Performance Computing (HPC) requires high bandwidth, low latency interconnect network communications. It uses specialized hardware, such as network switches and NICs (Network Interface Controllers) and their associated software stacks, to create an interconnect network, configured to interconnect compute and storage nodes, to execute high-performance applications. In such interconnect networks, such as BXI (for "Bull eXascale Interconnect"), nodes communicate in particular by exchanging network packets.

The exchanged network packets have an origin and a destination. To reach their destination, they follow paths determined by routers.

In fabrics with deterministic routing, congestion may exist as the same path is used for a traffic between two specific nodes, whereas other paths potentially without traffic may exist.

Adaptive routing has been developed to avoid this congestion issue. In adaptive routing, the routers determine the path for a specific packet based on a predetermined method of choosing an output port of the router. Current adaptive routing is not very flexible as routers are pre-configured with a single method which can lead to choosing an already congested path, even though the routing is called "adaptive".

To enable adaptive routing, the small messages and their reply/acknowledgement that fit in one frame are routed in an ordered way. For large messages of more than the frame MTU (Maximum Transmission Unit, 9k Bytes for example), a rendez-vous protocol is used and the data is segmented in multiple frames that can be routed in an adaptive way as well as their acknowledgement.

There is a need for a solution to provide a more flexible adaptive routing to transfer network packets in a high-performance computer.

### SUMMARY OF THE INVENTION

The present invention solves the above-mentioned problems by providing a solution which permits a more flexible adaptive routing taking into account congestion in the networks of high-performance computers.

According to a first aspect of the invention, this is satisfied by providing a method for adaptive routing implemented by a router of a high-performance computer, the high-performance computer comprising a plurality of nodes, the router interconnecting the plurality of nodes and comprising a plurality of input ports and a plurality of output ports, the method comprising at least:
- Receiving, at an input port of the plurality of input ports of the router, a packet to be routed towards an output port of the plurality of output ports of the router,
- Selecting an output port determination function from a plurality of predefined determination functions, based on a compliance of a network congestion of output ports of the plurality of output ports with predefined parameters,
- Using the determination function to determine at least one output port from a subset of the plurality of output ports, the subset of the plurality of output ports being determined based on the plurality of predefined parameters,
- Sending the packet using the determined output port.

Thanks to the invention, different methods to determine an output port of the router to use to route the packet can be used, as parameters associated with the determination methods are predefined, the compliance of the network congestion of the output ports of the router with the predefined parameters being the criterion for selecting or not a determination method.

Furthermore, the determination method will be used only on a subset of output ports, those for which the congestion complies with the predefined parameters. Therefore, the method according to the invention will never choose a congested output port if other output ports exist, and an optimal path in terms of network congestion will be followed by the packet.

The method according to the invention may also have one or more of the following characteristics, considered individually or according to any technically possible combinations thereof:
- the plurality of predefined determination functions comprises:
   - Deterministic port,
   - Last used port,
   - Round robin.
- the predefined parameters comprise:
   - A congestion threshold, the subset of the plurality of output ports being only output ports having a Virtual Channel having a congestion lower than the congestion threshold,
   - At least one Virtual Channel of an output port of the plurality of output ports to which the congestion threshold is to be applied.
- the parameter defining at least one Virtual Channel to which the congestion threshold is to be applied defines a type of virtual channel selected from:
   - All virtual channels,
   - Output virtual channels, the subset of the plurality of output ports being only output ports associated with output Virtual Channels,
   - Virtual channels without adaptive mode, the subset of the plurality of output ports being only output ports associated with Virtual Channels without adaptive mode,
   - A custom list of virtual channels.
- the congestion threshold defines a maximum congestion of an output buffer of a Virtual Channel.
- the predefined parameters further comprise a parameter defining if the output port to be determined is an output port associated with a minimal path, the subset of the plurality of output ports being only output ports associated with minimal paths.
- the predefined parameters associated with the determination function are predefined in a configuration register of the router.
- the configuration register of the router comprises a plurality of configurations, each configuration comprising a determination function and the associated predefined parameters.
- the configurations are ordered based on a predefined priority comprised in each configuration.
- selecting an output port determination function comprises, when the network congestion of output ports of the plurality of output ports complies with the parameters of several configurations, selecting the configuration with the higher priority.

Another aspect of the invention relates to a router comprised in a high-performance computer, the router being configured to implement the method according to the invention.

Another aspect of the invention relates to a High-performance computer comprising the router according to the invention.

Another aspect of the invention relates to a computer program product comprising instructions which, when the program is executed by the router of the high-performance computer according to the invention, cause the router of the high-performance computer to carry out the method according to the invention.

Another aspect of the invention relates to a computer-readable medium having stored thereon the computer program product of the invention.

The invention finds a particular interest in high-performance computers performing computations for transmitting network communications between compute nodes.

### BRIEF DESCRIPTION OF THE FIGURES

Other characteristics and advantages of the invention will become clear from the description that is given thereof below, by way of indication and in no way limiting, with reference to the appended figures, among which:
- Figure 1 is a schematic representation of a system configured to implement a method according to the invention,
- Figure 2 is a schematic representation of a method according to the invention,
- Figure 3 is an exemplary embodiment of a configuration register of a router configured to implement the method according to the invention.

### DETAILED DESCRIPTION

For greater clarity, identical or similar elements are marked by identical reference signs in all of the figures.

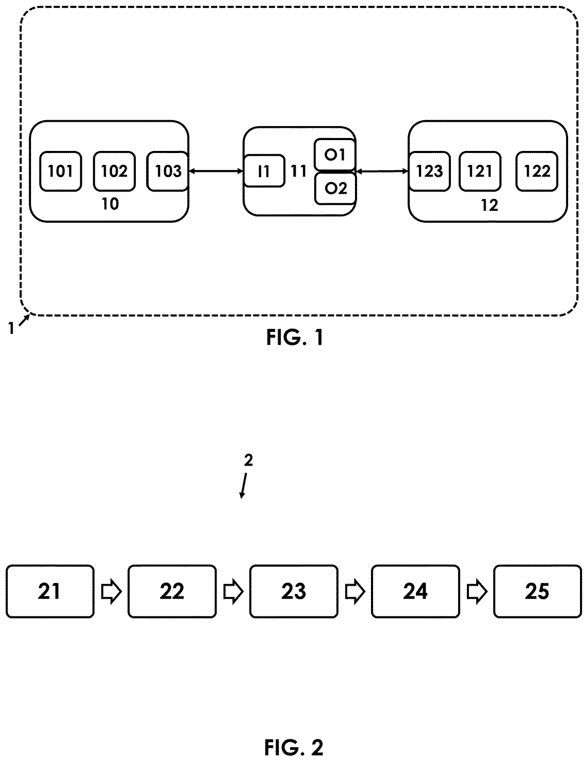

The invention is a high-performance computer such as the one represented schematically in Figure 1, comprising nodes 10 and 12 and a router 11.

Figure 1 is a schematic representation of an embodiment of a system according to the invention.

The system 1 represented in Figure 1 comprises a plurality of nodes 10 and 12 connected via a router 11. The nodes 10 and 12 can be comprised in different compute blades (not shown) of the high-performance computer. To do so, such a compute blade is comprised in a cabinet of the high-performance computer. A high-performance computer can comprise several cabinets, each cabinet comprising one or more compute blades and/or one or more storage blades, the cabinets being linked via a high-bandwidth, low-latency network. A compute blade preferably comprises several compute nodes, and a cabinet preferably comprises several compute blades.

The compute nodes 10 and 12 each comprises a couple processor-memory 101 and 102. The compute nodes 10 and 12 comprise respectively a processor 101 (respectively 121) and a memory 102 (respectively 122) communicatively coupled, so that the memory can store instructions and the processor can execute said instructions by accessing the memory. A processor is a device able to perform computations. When the instructions stored by the memory 102 (respectively 122) are executed by the processor 101 (respectively 121), the processor 101 (respectively 121) performs the actions defined in the instructions. Examples of such actions are computations, and, in particular in high-performance computers, intensive computations, such as weather forecasting or simulation.

Each compute node further comprises a network interface card 103 (respectively 123), also referred to as "NIC". The network interface card 103 (respectively 123) permits to communicate via a network, and in particular via the router 11, for example with another compute node, and in particular with the compute node 12, comprised in the same cabinet or not.

To execute an instance of a high-performance computing application, the processor 101 (respectively 121) executes instructions stored by the memory 102 (respectively 122) of the node 10 (respectively 12).

The network, represented by the router 11 but comprising more components, is an interconnect network, preferably a "BXI" network, also known as Bull eXascale Interconnect. Preferably, the network is a BXI network version 2 or 3. The interconnect network transports packets exchanged between the nodes 10 and 12. When the node 10 sends data to the node 12, the data is encapsulated in a network packet which is routed through the network via the router 11 towards its destination.

The router 11 comprises several input ports and output ports, each of which permits to define the path that will be used by a received packet. The router 11 for example comprises an input port I1 and two output ports O1 and 02. Preferably, the router 11 comprises more than 10 output ports and more than 10 input ports, for example 20 input ports and 20 output ports.

The invention permits to select the best output port of the router for an incoming packet. To solve this problem, the router 11 is configured to implement an adaptive routing method. By "configured to implement a method" is meant that the router stores instructions which, when executed by the router, lead the router to perform said method. This can be done by implementing a software for example. To do so, the router comprises a memory to store the instructions and a processor to execute the stored instructions to implement the method.

Figure 2 is a schematic representation of an embodiment of an adaptive routing method according to the invention.

The method 2 is for example implemented by the router 11 of the system 1 of Figure 1, that is by the router 11 of the High-Performance Computer 1.

The method 2 comprises at least four steps 21 to 24. The method 2 permits to manage congestion when routing incoming packets and to adapt the routing to the congested output ports, that is to use non-congested output ports.

A first step 21 of the method 2 is a step of receiving, by the router 11, an incoming packet. This packet is for example destined to the node 12 and has been emitted by the node 10. The router 11 being an intermediary network component between the two nodes 10 and 12, the packet has to go through the router 11 to go from one node to the other. Figure 1 is an exemplary embodiment of a high-performance computer, but most packet would go through several routers before reaching their destination. In such embodiments where the high-performance computer comprises several routers, each router of the high-performance computer is configured to implement the method 2 according to the invention.

At step 21, the packet is received at an input port of the router 11, for example at the input port I1. The packet now has to be routed, by the router 11, towards its destination node, via one of the output ports of the router 11. The router 11 thus has to determine which output port to use from its plurality of output ports, for example the router 11 has to determine which output port to use between O1 and 02. Each output port is connected to a different path that the packet will follow if said output port is selected as the output port to use.

At step 22 of the method 2, an output port determination function is selected from a plurality of predefined determination functions, based on a compliance of a network congestion of output ports of the plurality of output ports with predefined parameters.

It is understood by "predefined determination function" a function which permits to determine an output port to use amongst a plurality of output ports. Such predefined determination functions can thus be:
- A deterministic function, where the port to use is predetermined, for example by a routing table of the router 11,
- A function indicating to use the last used output port, for example using the last index of the routing table used,
- A round robin function, to select an output port from the plurality of output ports, as a function of the last used output port, based on the index of the routing table. Using this round robin function, each output port is tested against the predetermined parameters and the selected output port is the next output port, based on a history of selected output ports from the routing table.

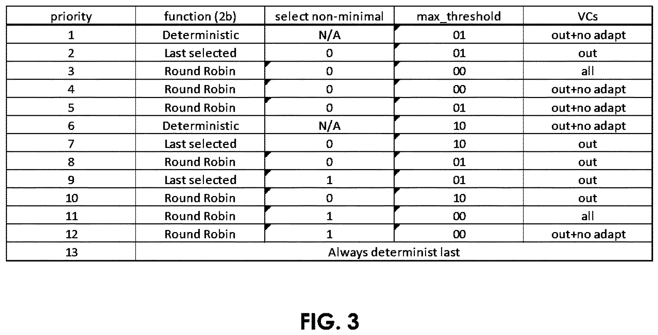

To select a function from the plurality of predefined determination functions, each function is associated to a plurality of parameters and their values. An example of such an association is represented schematically at Figure 3, which shows a configuration register of the router 11. For example, in said table, to a port determination function are associated three parameters.

The three parameters are:
- A parameter defining if a minimal path has to be chosen (select non-minimal),
- A congestion threshold (max_threshold),
- At least one Virtual Channel (VC) of an output port of the plurality of output ports to which the congestion threshold is to be applied.

A minimal path is a path which can be used to route the adaptive traffic with the lowest possible number of hops (= switches traversed) between the emitter and the recipient. A non-minimal path is a path which can be used to route the adaptive traffic with more hops than the lowest possible number of hops (= switches traversed) between the emitter and the recipient. The "lowest possible number of hops" can also be predefined in a configuration file accessible to the router 11. The parameter stating if minimal paths have to be chosen can for example be a Boolean or a binary value. In Figure 3, this parameter is a binary value: 0 representing the ability to use only minimal paths, and 1 the ability to also use non-minimal paths. When the associated function is "deterministic", the output port is already determined by the routing table of the router 11, and this first parameter has no value.

The second parameter is a congestion threshold parameter, the congestion threshold defining a maximum occupancy of virtual channels of the output ports. The output ports of a router have Virtual Channels, which permit to differentiate traffic belonging to different messages. A Virtual Channel is a logical route, it is like a class of service used for example to prioritize traffic. Virtual Channels ensure that traffic does not interfere with each other by providing independent buffering for each Virtual Channel. In High-performance Computers, output ports can have different Virtual Channels, such as compute Virtual Channels to manage exchanges in compute applications, and service Virtual Channels use only for the servicing of compute Virtual Channels. A congestion threshold is therefore a maximum buffering space allowed for each Virtual Channel. In other words, a congestion threshold is the maximum number of reserved positions in an output buffer. The congestion threshold is for example defined on two bits, for example 00 corresponding to a first value, for example 50, 01 corresponding to a second value, for example 200, etc.

The last parameter is a parameter stating to which output ports the function should be applied, or, more specifically, to which virtual Channel the function should be applied, wherein selecting a Virtual Channel means selecting its associated output port.

In the configuration register of the router 11, as shown at Figure 3, several configurations can be predefined, for example by a user. The different configurations are preferably associated with a priority and are therefore ordered. When trying to select a port determination function at step 22, the configuration with the highest priority, for example the configuration 1, will be tested. To "test" a configuration, it is checked if the congestion of a Virtual Channel of an output port complies with the predefined parameters and their values. A congestion "complies" with parameters if the congestion value of the Virtual Channel is lower than the maximum congestion threshold value defined in the "congestion threshold" parameter. For example, for the configuration with the highest priority "1", the function is deterministic (the output port is predefined by the routing table of the router 11), the maximum congestion threshold is "01 ", for example corresponding to 200 reserved positions in the buffer of the Virtual Channel to be checked, and the Virtual Channels to be checked are the output virtual channels and the virtual channels without adaptive mode. A Virtual Channel without adaptive mode is a Virtual Channel which cannot route adaptive traffic, and therefore only routes deterministic traffic.

Therefore, the configuration register reads as follows, for the configuration with highest priority "1" : if the output port predefined has a Virtual Channel with an occupancy of less than 200 reserved positions, select the deterministic function to select the output port defined by the routing table of the router 11 to route the packet towards the node 12. Else, if at least one of the minimal output ports ("select non-minimal" being at "0") has an output Virtual Channel with an occupancy of less than 200 reserved positions, use the last selected output port. Else, if at least one of the minimal output ports ("select non-minimal" being at "0") has a Virtual Channel ("VCs" being at "all") with an occupancy of less than 50 ("max_threshold" being at "00") reserved positions, select an output port in a round robin from all the output ports matching the parameters, that is for a subset of the output ports where the output ports are minimal output ports with a Virtual Channel with an occupancy of less than 50 reserved positions. This example explained the first three configurations in order of priority, but the configuration register is not limited in its length, and can have for example solely 12 configurations, with an added 13^{th} configuration defining the deterministic function to use with the lowest priority, so as to always choose a function even if all the output ports are congested. Preferably, all the configurations are checked in parallel, that is all at once, and an arbitration module selects the configuration with the highest priority matching all the parameters, to select the port determination function to use.

The configuration register can be defined as a sequence of bits, for example:
- Function to select (2 bits)
   - 00 = bypass step
   - 01 = deterministic port selection
   - 10 = last used port selection
   - 11 = round robin
- Consider non minimal adaptive paths (unused for deterministic step) (1 bit)
- Max threshold (2 bits): configurable, for example in a configuration file defining the correspondence of the values of the two bits with congestion values.
- Virtual Channel group considered for the max threshold (2 bits):
   - 00 = only output Virtual Channel
   - 01 = add a list of Virtual Channels with no adaptive paths: csr vcs_no_adapt(15:0)
   - 10 = add a custom list: csr vcs_custom(15:0)
   - 11 = all Virtual Channels

The two lists vcs_no_adapt and vcs_custom are lists of Virtual Channels for which the congestion has to be matched against the congestion threshold, if the VCs parameter takes the indicated value ("01" or "10").

Once the congestion of the Virtual Channels defined by a configuration register are checked, and if at least one of the Virtual Channels has a congestion which complies with the congestion threshold, the determination function associated with the configuration is selected and the method 2 comprises a next step 23 of selecting the output port to use, using the function selected at step 22.

If the function is deterministic, the output port to use is the one defined in the routing table of the router 11. If the function is last-used port, the output port to use is the last port used as defined in the routing table of the router 11. If the function is round-robin, a round-robin is performed between the subset of output ports matching the congestion threshold parameter, as a function of the lastly used output port in the routing table, the round-robin function using for example the index of the output ports in the routing table of the router 11 to order the output ports and select a next port to use.

Once the output port has been determined at step 23, or once the Virtual Channel has been determined at step 23, the packet is sent using the determined Virtual Channel and its associated output port.

## Claims

1. Method (2) for adaptive routing implemented by a router (11) of a high-performance computer (1), the high-performance computer (1) comprising a plurality of nodes (10,12), the router (11) interconnecting the plurality of nodes (10,12) and comprising a plurality of input ports (11) and a plurality of output ports (O1, 02), the method (2) comprising at least:
- Receiving (21), at an input port (I1) of the plurality of input ports of the router (11), a packet to be routed towards an output port of the plurality of output ports (01,02) of the router (11),
- Selecting (22) an output port determination function from a plurality of predefined determination functions, based on a compliance of a network congestion of output ports of the plurality of output ports (01,02) with predefined parameters,
- Using the determination function to determine (23) at least one output port from a subset of the plurality of output ports (01,02), the subset of the plurality of output ports (01,02) being determined based on the plurality of predefined parameters,
- Sending (24) the packet using the determined output port.

2. Method (2) according to the preceding claim wherein the plurality of predefined determination functions comprises:
- Deterministic function,
- Last used port function,
- Round robin function.

3. Method (2) according to any one of the preceding claims wherein the predefined parameters comprise:
- A congestion threshold, the subset of the plurality of output ports (01,02) being only output ports having a Virtual Channel having a congestion lower than the congestion threshold,
- At least one Virtual Channel of an output port of the plurality of output ports (O1,O2) to which the congestion threshold is to be applied.

4. Method (2) according to claim 3 wherein the parameter defining at least one Virtual Channel to which the congestion threshold is to be applied defines a type of Virtual Channel selected from:
- All Virtual Channels,
- Output Virtual Channels, the subset of the plurality of output ports (01,02) being only output ports associated with output Virtual Channels,
- Virtual Channels without adaptive mode, the subset of the plurality of output ports (01,02) being only output ports associated with Virtual Channels without adaptive mode,
- A custom list of virtual channels.

5. Method (2) according to claims 3 or 4 wherein the congestion threshold defines a maximum congestion of an output buffer of a Virtual Channel.

6. Method (2) according to any one of claims 3 to 5 wherein the predefined parameters further comprise a parameter defining if the output port to be determined (23) is an output port associated with a minimal path, the subset of the plurality of output ports being only output ports (01,02) associated with minimal paths.

7. Method (2) according to any one of the preceding claims wherein the predefined parameters associated with the determination function are predefined in a configuration register of the router (11).

8. Method (2) according to claim 7 wherein the configuration register of the router (11) comprises a plurality of configurations, each configuration comprising a determination function and the associated predefined parameters.

9. Method (2) according to claim 8 wherein the configurations are ordered based on a predefined priority comprised in each configuration.

10. Method (2) according to claim 9 wherein selecting an output port determination function comprises, when the network congestion of output ports of the plurality of output ports (01,02) complies with the parameters of several configurations, selecting the configuration with the higher priority.

11. Router (11) comprised in a high-performance computer (1), the router (11) being configured to implement the method (2) according to any one of the preceding claims.

12. High-performance computer (1) comprising the router (1) of claim 11.

13. A computer program product comprising instructions which, when the program is executed by the router (11) according to claim 11, cause the router (11) to carry out the method (2) according to any of claims 1 to 10.

14. A computer-readable medium having stored thereon the computer program product of claim 13.
